# EUROPEAN PATENT APPLICATION

(11) **EP 3 540 032 A1**
(43) Date of publication of application: **18.09.2019**
(21) Application number: 19163279.3
(22) Date of filing: 15.03.2019
(51) Int. Cl.: C10L 9/08, C10L 5/40, C10L 5/44, C10L 5/46

(54) **PROCESSING WASTE INTO CARBON CHAR**

(30) Priority: 16.03.2018 GB 201804205
(71) Applicant: Wilson Bio-Chemical Limited, Dunnington, York YO19 5SN (GB)
(72) Inventor: WILSON, Thomas Steven, Sheffield S21 5RY (GB)
(74) Representative: Atkinson & Company Intellectual Property Limited

(57) **Abstract**

Apparatus for processing waste-derived cellulose fibre into carbon char comprises an autoclave for treating waste with steam to produce processed material. The processed material includes cellulose fibre and plastics. The apparatus also includes a drying system for drying the cellulose fibre, and a torrefying unit for torrefying the dried cellulose fibre to produce carbon char. Thermal conversion means for thermally converting either said plastics or said VOCs provides heat for at least one of the autoclave, the drying system and the torrefying unit.

## Description

### CROSS REFERENCE TO RELATED APPLICATIONS

This application represents the first application for a patent directed towards the invention and the subject matter.

### BACKGROUND OF THE INVENTION

The present invention relates to apparatus and a method for processing waste into carbon char.

It is known to process waste using an autoclave to produce clean cellulose fibre. However, the uses for this fibre are limited because it is still considered by most authorities to be waste, even though it has been sterilised.

The procedures available for disposing of waste are largely limited to burying it or burning it. There is a movement towards reducing landfill, and incineration is widely seen as producing too many greenhouse gases.

### BRIEF SUMMARY OF THE INVENTION

According to an aspect of the present invention, there is provided apparatus for processing waste-derived cellulose fibre into carbon char, comprising an autoclave for treating waste with steam to produce processed material, said processed material including cellulose fibre and plastics, a drying system for drying said cellulose fibre, and a torrefying unit for torrefying said dried cellulose fibre to produce carbon char and VOCs, and thermal conversion means for thermally converting either said plastics or said VOCs, in order to provide heat for at least one of said autoclave, said drying system or said torrefying unit.

According to a second aspect of the invention, there is provided a method of producing carbon char from waste, comprising the step of processing waste by treating said waste with high pressure steam to produce processed material that includes cellulose fibre and plastics, and torrefying said cellulose fibre to produce carbon char and VOCs; wherein heat used during said step of processing waste is produced by thermally converting at least one of said plastics and said VOCs.

### BRIEF DESCRIPTION OF THE SEVERAL VIEWS OF THE DRAWINGS

Figure 1 shows an apparatus embodying the invention;
Figure 2 shows a recycling unit shown in Figure 1;
Figure 3 shows an energy generation unit shown in Figure 1;
Figure 4 shows a steam treatment unit shown in Figure 2;
Figure 5 shows a fibre processing unit shown in Figure 1;
Figure 6 shows a torrefying unit shown in Figure 5;
Figure 7 shows a drying unit shown in Figure 6; and
Figure 8 details steps taken to carry out a method embodying the invention.

### DETAILED DESCRIPTION OF EMBODIMENTS OF THE INVENTION

### Figure 1

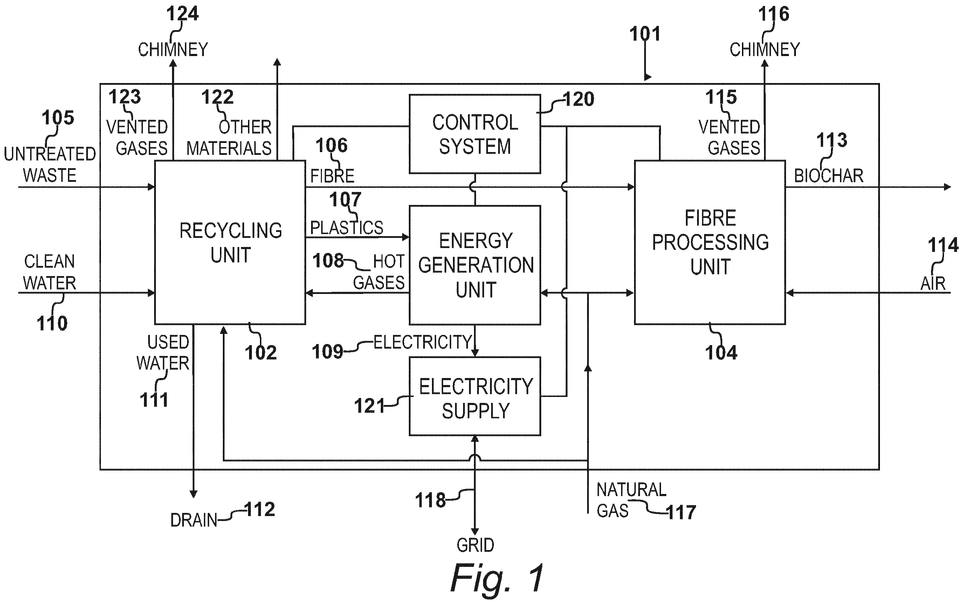

Figure 1 shows apparatus **101,** which is an embodiment of the invention. It includes a recycling unit **102,** an energy generation unit **103,** a fibre processing unit **104,** a control system **120,** and an electricity supply **121.**

Untreated waste **105** enters recycling unit **102** where it is processed and sorted into cellulose fibre **106,** plastics **107,** and other materials **122,** which includes non-organic materials such as metals and bricks. The recycling unit needs a supply of clean water **110,** and used water **111** is routed to drain **112.** Cooled and cleaned gases **123** are vented to atmosphere via a chimney **124.**

Plastics **107** are passed to energy generation unit **103,** where they are used to generate heat for the recycling unit in the form of hot gases **108,** and electricity **109.** Electricity is routed to electricity supply **121,** which supplies electricity to all the units and systems in apparatus **101** (the details of this are not shown). In the case that the electricity generated by energy generation unit **103** is insufficient, for example in the case of the breakdown of energy generation unit **103,** power may be drawn from the grid **118.** However, in normal use there will be no requirement for this. Electricity may also be supplied to the grid in the case of over-production.

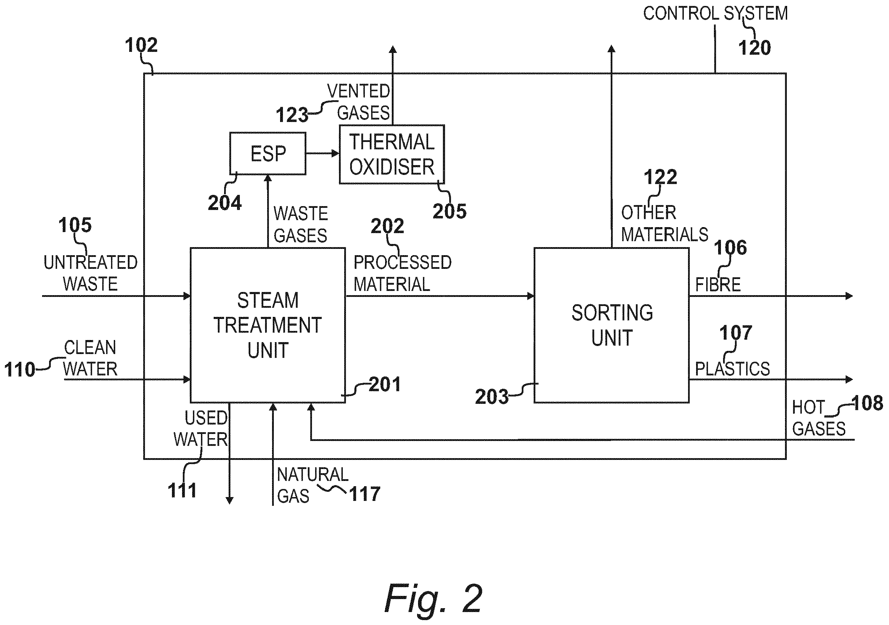

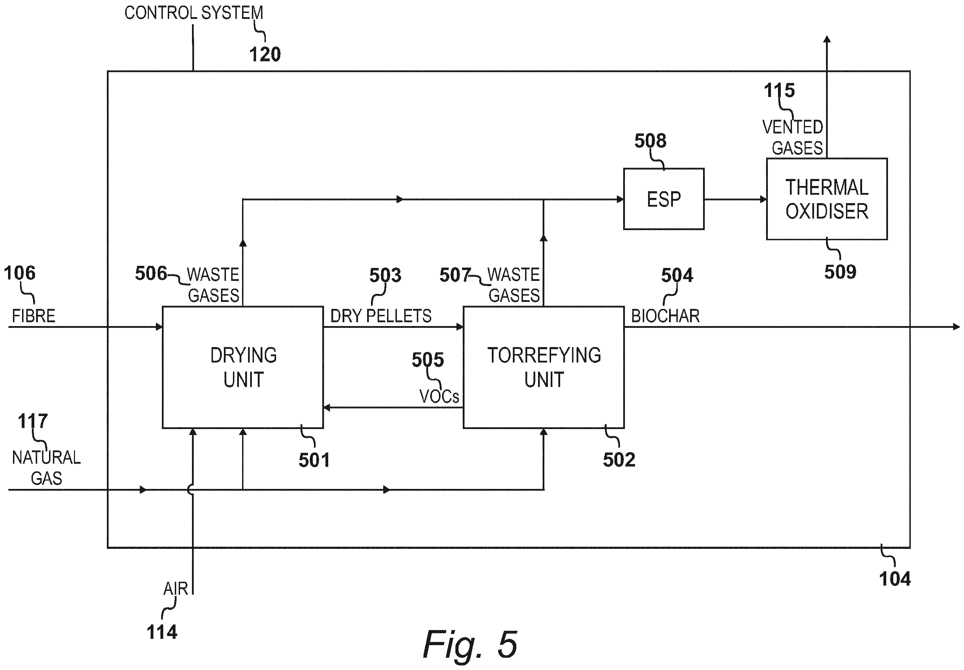

Fibre **106** is passed from recycling unit **102** to fibre processing unit **104** which processes it into carbon char, or biochar, **113.** The fibre processing unit requires a supply of air **114,** and cooled and cleaned gases **115,** including the air, are vented to atmosphere via a chimney **116.** In other embodiments, a single chimney may be used. This is dependent mainly upon the distance between the units and the capacity of the cooling equipment (which will be described further with reference to Figures 2 and 5).

Control system is connected to all units within apparatus **101.** It controls the entire process and provides feedback to operators on process, performance, and environmental systems, including valves, Temperatures, flow meters, burner status, and so on. Any suitable computer system and display may be used, and any appropriate methods of connecting it to the various control elements and sensors are envisaged.

Under normal operating conditions, apparatus **101** is self-sufficient, running entirely on fuel and electricity produced from waste **105.** However, in the case that the fuel needs supplementing, for example in the case of a breakdown of a part, natural gas **117** may be provided to recycling unit **102,** energy generation unit **103,** or fibre processing unit **104,** in order that the apparatus need not be shut down. Apparatus **101** is designed to operate continuously, in order to both maximise the amount of waste processed and avoid the inefficiencies associated with cooldowns and restarts.

Apparatus **101** takes untreated waste **105,** which is generally considered to be difficult to dispose of, and turns it into carbon char, which has many uses. The applicant has obtained end of waste certification for carbon char produced from waste using the apparatus described herein, meaning that it can be used for the same purposes as carbon char produced from any other biomass. However from an environmental perspective it is preferable, as it is not produced using a virgin product such as wood.

Carbon char has a higher calorific value than the cellulose fibre that is torrefied, and is also more dense. It is no sulphur content and less nitrogen than coal, and can therefore be classified as clean coal, and can be burnt in power stations with lower emissions than coal. It can also be used as a soil sequestrant, and with fertilisers added it can be sold as a conditioner and fertiliser for the agricultural and horticultural markets.

The conversion of waste into carbon char is therefore preferable to sending the waste to landfill. It is also preferable to incinerating the waste, as the apparatus described herein uses each element of the waste - organic matter, plastics, and other waste - in a different way, thus greatly increasing the efficiency of the system over simple incineration, which cannot combust everything completely due to it all being burnt together at the same temperature.

### Figure 2

Figure 2 shows recycling unit **102,** which comprises steam treatment unit **201,** sorting unit **203,** electrostatic precipitator **204,** and thermal oxidiser **205.** Control system **120** provides monitoring and control of recycling unit **102** (the details of this are not shown).

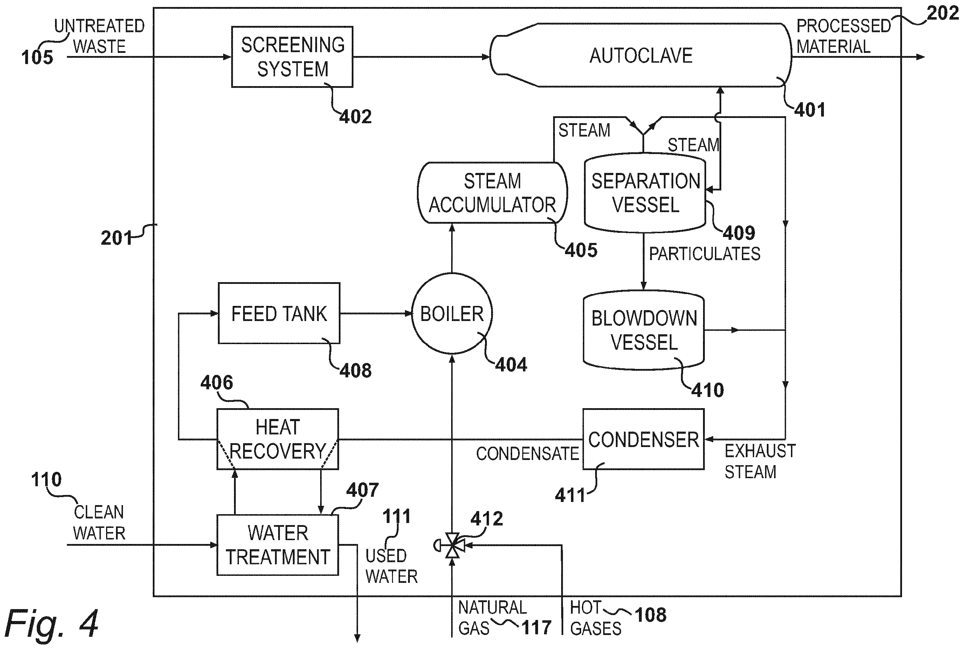

Untreated waste **105** is processed in steam treatment unit **101** (which is detailed in Figure 4), using heat from hot gases **108,** and water **110,** to produce processed material **202,** which is clean and sterile. This is passed to sorting unit **203** where it is sorted into fibre **106,** plastics **107,** and other materials **122.**

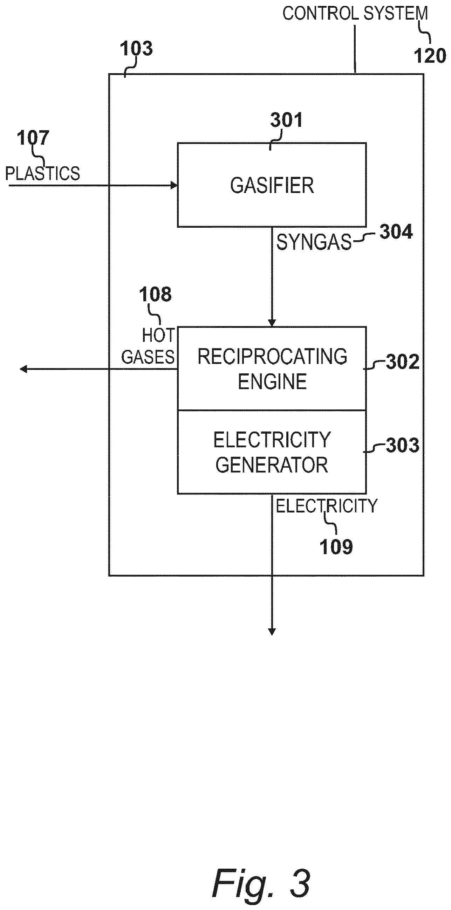

Sorting unit **203** comprises a mechanical separation system. Automatic systems take out the various fractions, and the relatively small amount of residual items are separated and removed manually. Fibre **106** is automatically separated from the other items and may be transported to storage (not shown) before being passed to fibre processing unit **104.** Other materials **122,** such as metals, bricks, and so on, are sent to a suitable place for recycling or reuse. However, plastics **107** are passed to energy generation unit **103** to generate hot gases **108** and electricity **109,** as will be described with reference to Figure 3.

### Figure 3

Figure 3 shows energy generation unit **103.** It comprises a gasifier **301,** and a reciprocating engine **302** connected to a electricity generator **303.** Control system **120** provides monitoring and control of energy generation unit **103** (the details of this are not shown).

Plastics **107** are provided to gasifier **301,** which gasifies the plastics using low oxygen combustion to produce synthesis gas, or syngas **304.** This fuel is used by reciprocating engine **302** to turn electricity generator **303** and generate electricity **109.** The exhaust gases from reciprocating engine **302** are passed as heat **108** to recycling unit **102.**

Thus, recycling unit **102** is self-sufficient for heat, as the heat required to process the waste in steam treatment unit **201** is generated using plastics **107.** Electricity **109** is used to provide electricity to the entire apparatus **101.**

In the event of a breakdown of gasifier **301** or reciprocating engine **302,** or in the case of an unexpected reduction in the amount of plastics **107** received from recycling unit **102,** natural gas can be supplied to recycling unit **102** as will be discussed with respect to Figure 4. In such a case, electricity supply **121** would be switched to receive electricity from the grid **118.** As previously discussed, a supply of natural gas is provided in order to ensure that apparatus **101** does not need to shut down in the event of the breakdown of a component or an unexpected change in the composition of the untreated waste **105.** However, in normal operation, natural gas **117** will not be required.

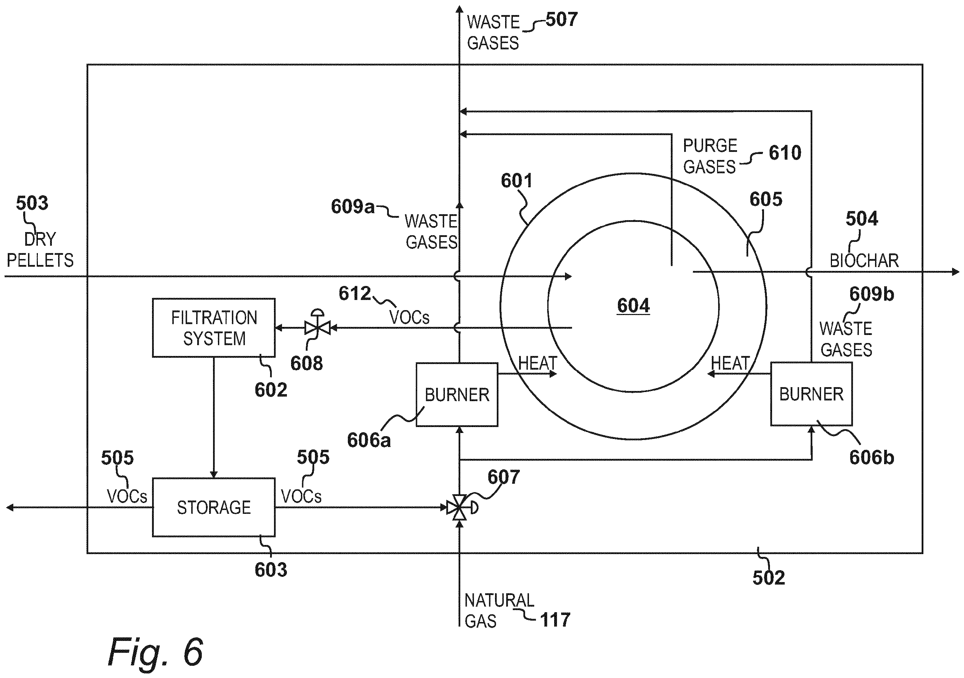

In place of the gasifier and reciprocating engine described herein, other systems for thermally converting plastics to generate heat may be used. In addition, the output of the unit may be altered to suit design requirements. In addition, as will be described with respect to Figure 6, the heat produced by energy generation unit **103** could be used in fibre processing unit **104,** with fibre processing unit **104** providing heat to recycling unit **102.**

### Figure 4

Steam treatment unit **201** is shown in Figure 4. In this example, steam treatment unit **201** is adapted to treat municipal solid waste in which the treatment process results in the formation of particulates. Untreated waste **105** in the present example is municipal solid waste, which typically comprises glass, ceramics, waste food, cellulosics (paper, garden waste), metallics (aluminium cans, iron-based materials etc.) and so on. It is contemplated, however, that the unit described herein may be used with any form of solid waste.

Steam treatment unit **201** comprises an autoclave **401,** to which untreated waste **105** is provided via a screening system **402,** which removes bulky items. The screened waste is typically loaded into autoclave **401** for mechanical heat treatment by means of a conveyor system, with autoclave door operation being achieved automatically by control system **120.** Autoclave **401** is charged with dry steam from a steam storage system, comprising a boiler **204** in combination with a steam accumulator **205.** The conditions in the autoclave are brought to **160 °C** and 5 bar gauge. These conditions are maintained and the autoclave is rotated for a total treatment time of around 30 to 60 minutes. The temperature and pressure are chosen to be high enough to comply with requirements for sterilisation of animal byproduct, i.e. by killing bacteria, but not too high to begin melting plastic. In addition, the steam treatment results in labels, paint and grease being stripped from, for example, bottles and containers.

During autoclaving, all biogenic content of untreated waste **105** is converted into a fibre material which has a high proportion of cellulose content. As the fibre is the organic components of the MSW, it is accompanied by the input metals, plastic, glass, and so on. Thus, steam treatment of untreated waste **105** in autoclave **401** results in the generation of processed material **202,** including fibre, plastics, and other materials, which is then provided to sorting unit **203.**

In order to charge autoclave **401** with steam for the mechanical heat treatment process, the steam treatment unit **201** has a steam storage system comprising a boiler **404** and a steam accumulator **405.** Boiler **404** is in this example a waste heat/gas boiler which recovers heat from hot gases **108,** although in the event of hot gases **108** not being available, control valve **412** provides natural gas **117** to be thermally converted in boiler **404** instead. This allows the efficient production of dry, saturated steam. Water for the boiler **404** is pre-heated to a temperature below its boiling point, such as 80°C, in a heat recovery system **406** following treatment in a water treatment system **407,** which comprises water purification apparatus of the known type. In an example, the heat recovery system **406** utilises a heat exchanger system for recovering heat from steam and condensate exhausted from the autoclave **401** during and after the mechanical heat treatment process. Contaminated water from the autoclave **401** is, following heat recovery, then passed to the water treatment system **407** for purification along with further processing by odour abatement apparatus of the known type therein.

Pre-heated water from the heat recovery system **406** is supplied to a feed tank **408** for storage and pre-treatment to remove impurities prior to being fed to the boiler **404.**

Due to the high residual vapour pressure in the autoclave **401,** steam is discharged at relatively high velocities, typically critical velocity. The velocity of steam exiting the autoclave **401** is dictated by the pressure differential. At the beginning of the discharge stage there is a large pressure differential, greater than critical pressure drop, and so the velocity is high. Gradually as steam is discharged, the pressure differential will drop and in order to maintain a sufficient flow velocity it may be necessary to apply a vacuum to maintain the rate of discharge. Appropriate vacuum apparatus (not shown) may therefore be provided downstream of the separation vessel **409** to facilitate this.

The steam when being exhausted from the autoclave **401** will tend to carry entrained with it some particulates such as splinters of glass, ceramic fragments and fibre. Separation vessel **409** separates these particulates from the flow of steam exiting the autoclave **401.** In addition, autoclave **201** forming part of the solid waste treatment system of the present invention specifically does not have a particulate filter at its own outlet. A blowdown vessel **410** is provided below the separation vessel **409** for receipt of the particulates from the separation vessel **410.** In this way, there is no filtration means in the autoclave which may become blocked.

Steam exiting the autoclave **401** following mechanical heat treatment is received at an inlet of the separation vessel **401,** and passes, via an outlet, onward to the heat recovery system **406** via a condenser **411.**

Input steam from steam accumulator **405** during the charging of autoclave **401** prior to mechanical heat treatment is routed via the outlet of separation vessel **409** and onward, via its inlet, to autoclave **401.** Appropriate valve control by control system **120** facilitates this routing of the steam during the various operational phases of the system.

The above-described steam treatment unit is an example of the type of unit that can be used to treat waste with steam to produce clean cellulose fibre. Other suitable systems may be used. However, all such systems will require heat in order to generate steam, as provided by hot gases **108.** In other embodiments, as described elsewhere, the heat may be provided from a different source.

### Figure 5

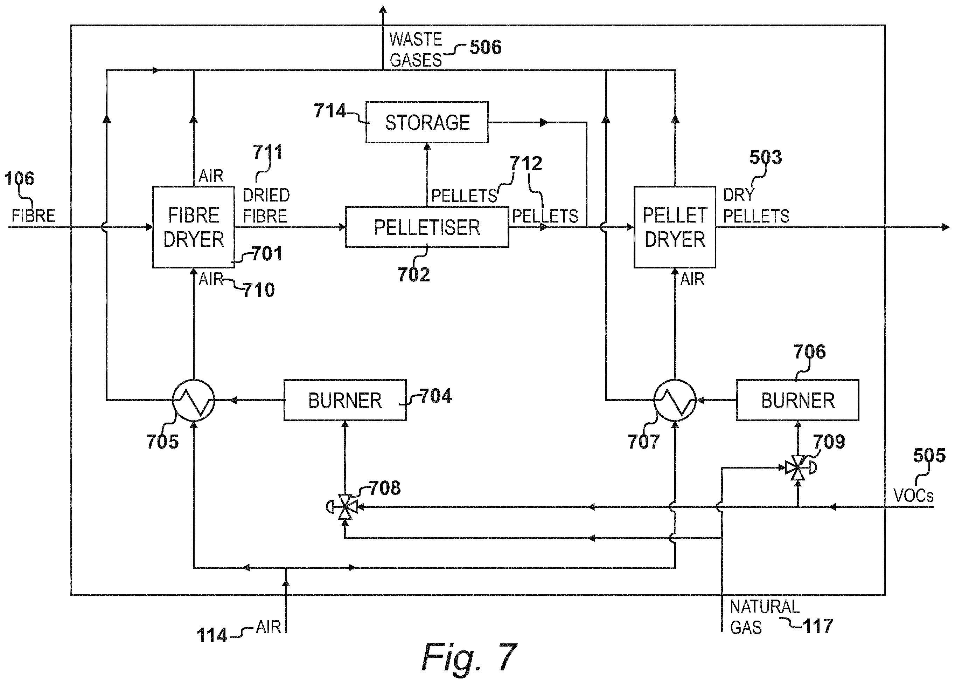

Figure 5 shows fibre processing unit **104.** It includes a drying unit **501** (detailed further in Figure 7) and a torrefying unit **502** (detailed further in Figure 6). Control system **120** provides monitoring and control of the units (the details of this are not shown).

Clean fibre **106** produced by recycling unit **102** is passed through drying system **501** to produce dry pellets **503** of fibre, which are torrefied in torrefying unit **502** to provide biochar **504.**

The torrefying process produces volatile organic compounds (VOCs), and these are thermally converted to provide heat. Some are retained to provide heat in torrefying unit **502,** as will be described further with respect to Figure 6, and some are provided to drying unit **501.** The system is self-sufficient under normal operation, but should an alternative source of fuel be required in the event of a breakdown, this is provided by natural gas **117.**

Clean air **114** is used by drying unit **501** to dry fibre **106.** Waste gases **506** from drying unit **501,** including the air after it is used, and waste gases **507** from torrefying unit **502** are passed to electrostatic precipitator **508** to remove any solids, before being oxidized in thermal oxidiser **509.** The vented gases **115** are therefore odourless.

Similarly to recycling unit **102,** fibre processing unit **104** is self-sufficient. VOCs **505** produced by torrefying unit **502** are used to heat both drying unit **501** and torrefying unit **502.** In another embodiment, VOCs **505** could be thermally converted to provide heat to recycling unit **102,** and heat **108** produced by energy generation unit **103** could be used in fibre processing unit **104,** as will be described with respect to Figure 6. The exact configuration of the system is dependent on its size, design considerations, and the composition of the waste **105.**

Typical domestic waste contains a large quantity of plastics, and therefore if this is the waste being processed then energy generation unit **103** will produce a considerable amount of electricity and heat. However, if recyclable materials are removed before the waste is supplied to apparatus **101,** such that untreated waste **105** contains mainly organic material, then the heat and electricity generated by energy generation unit **103** will be small. However, the amount of fibre **106,** and therefore the amount of VOCs produced by torrefying unit **502,** will be greater. Therefore, depending on whether the recycling unit **102** or the fibre processing unit **104** needs more heat, and depending on the typical waste processed, a design decision will be made as to how to route heat through the system.

In a further embodiment, the apparatus could be designed such that both the heat generated by reciprocating engine **302** and the heat generated by thermally converting VOCs **505** could be supplied to both the recycling unit **102** and the fibre processing unit **104,** with a control system **120** ensuring that both units are supplied at a consistent level. This might be an appropriate design if the composition of untreated waste **101** were likely to vary significantly.

### Figure 6

Torrefying unit **502** is shown in Figure 6. It comprises a torrefaction reactor **601,** a VOC filtration system **602,** and VOC storage **603.**

Torrefaction reactor **601** comprises a chamber **604** and an annular heating jacket **605.** Chamber **604** is cylindrical, and fibre in the form of dry pellets **503** is introduced at one end of chamber **604** and passed continuously through it, for example along a conveyer belt, before exiting as biochar **504.** Heating jacket **605** is annular and surrounds the entire chamber **604.**It is heated using a number of burners. In this example two burners **606a** and **606b,** positioned on opposite sides of the reactor **601,** provide heat to jacket **605,** but any suitable number and position of burners could be used. Jacket **605** is insulated to reduce heat loss.

Chamber **604** is purged by nitrogen during operation to be oxygen-free, and is heated by jacket **605** to around **270 °C.** This controlled atmosphere induces volatilisation of the VOCs within the fibre, which are extracted from the chamber as extracted VOCs **612,** and passed through filtration system **602** to remove any entrained solids carried over from the chamber, before being stored in storage **603** as filtered VOCs **505.**

Filtered VOCs **505** are then used to provide heat, both to the torrefaction reactor using burners **606a** and **606b,** and to the drying unit **501** (as will be described with reference to Figure 7). In burners **606a** and **606b,** VOCs **505** are thermally converted in order to generate heat. In an unusual situation, for example filtration system **602** breaking down, natural gas **117** can replace the VOCs in the burners, and control valve 607 ensures that there is a constant flow of fuel to the burners. However, in normal operation, VOCs **505** will be sufficient to heat torrefaction reactor **601.**

The temperature inside chamber **604** is held at around **270**°C by control system **120.** Control system **120** is connected to sensors within torrefaction reactor **601,** to burners **606a** and **606b,** and to control valve **608.** When the temperature in chamber **604** deviates from a set point, control system **120** will cause the burners **606a** and **606b** to modulate to maintain a consistent temperature. Control valve **608** will modulate to maintain a consistent pressure within chamber **604;** for instance when the pressure increases above a set point, control valve **608** will release more VOCs **612.** In this way control system **120** maintains consistent conditions of temperature and pressure in chamber **604.** Control system **120** is preferably configured so that burners **606a** and **606b,** and control valve **608,** along with other elements controlled by control system **120,** react proportionally and smoothly in order to achieve constant temperature and pressure within chamber **604.**

Torrefaction reactor **601,** under normal operating circumstances, produces more VOCs than are necessary to heat furnace **605.** Thus VOCs **505** are also supplied to drying unit **501,** as will be described with reference to Figure 7.

The products of combustion discharged from burners **606a** and **606b** are output as waste gases **609a** and **609b,** which together with the nitrogen gas **610** used to purge oxygen from chamber **604,** are output as waste gases **507** and sent to ESP **508.** In the apparatus described herein, it is expected that there will be an excess of heat produced, and therefore there is no need to reclaim the heat from waste gases **609a** and **609b.** However, in other embodiments the heat could be reclaimed for use in any unit of the apparatus.

For example, in one embodiment, the heat from the waste gases **609a** and **609b** could be used to supplement heat drying unit **501,** in case VOCs **505** are insufficient. In a further embodiment, waste gases **609a** and **609b** could be routed to steam treatment unit **201** for use in waste heat boiler **404** along with hot gases **108** from reciprocating engine **302.** In a yet further embodiment, the waste gases could be used to generate additional electricity. As previously discussed, the size of the apparatus and the type of waste processed will inform such design considerations.

Burners are described herein, but other thermal conversion means suitable for thermally converting the VOCs could be used.

To create maximum redundancy in the system, all the above options could be included, with control system **120** routing the waste gases to the unit where they are of most use. This could reduce the necessity to rely on natural gas **117** in the event of a breakdown, but would increase the size, complexity and cost of the apparatus.

As described with reference to Figure 5, in another embodiment the heat produced by energy generation unit **103** could be used to heat the torrefaction reactor. In that case, the reactor would comprise a heat exchanger instead of burners and there would be no waste gases produced. The VOCs would in that embodiment be thermally converted to provide heat for steam treatment unit **201,** and the waste gases would be managed in any of the ways described above.

In an embodiment where both the steam treatment unit and the torrefaction reactor are powered by thermal conversion of either the VOCs or the plastics, it is envisaged either that both units could include a furnace or that there would be a central furnace. The control system **120** would route the VOCs in the first case or the heat produced in the second case, along with the heat from energy generation unit **103,** according to the requirements of the steam treatment unit and the torrefaction reactor. Such an embodiment would add significantly to the size, complexity and cost of the apparatus, but would provide flexibility if the waste to be treated were extremely variable in composition.

### Figure 7

Drying unit **501** is shown in Figure 7. It includes a fibre dryer **701,** a pelletiser **702,** and a pellet dryer **703.** Burner **704** provides heat to a heat exchanger **705** that heats air **114** for use in fibre dryer **701.** Similarly, burner **706** produces heat for heat exchanger **707** that heats air **114** for use in pellet dryer **703.** Both burner **704** and burner **706** are primarily supplied by VOCs **505.** Under normal operating circumstances, enough VOCs are produced by the torrefaction process to provide heat for the whole fibre processing unit **104.** However, in case of any breakdown, natural gas **117** may be used to supplement or replace VOCs **505.** A control valve **708** controls the supply of either VOCs **505** or natural gas **117** into burner **704,** and a control valve **709** does similarly for burner **706.**

Air **114** is heated in each of the heat exchanges **705** and **707** and used in the dryers as follows. Fibre **106** is output from the autoclave with a moisture content of 30% to 40%. Fibre dryer **701** has a serpentine shape, and air **710,** heated to around **150**°C by heat exchanger **705,** is blown from bottom to top through the dryer. Fibre **106** is propelled at high velocity from the bottom to the top of the serpentine shape. This breaks open any fibres that are stuck together, and any heavier material that remains, such as shards of glass, fall to the bottom and are separated as residue. After reaching the top of the serpentine shape, the fibre exits the dryer as dried fibre **711,** which has a moisture content of around 15 to 17%.

Dried fibre **711** is then milled to make it finer and pelletised in pelletiser **702,** to form pellets **712.** The pelletiser operates at 70°C and is heated using electricity. A small amount of moisture is lost during the pelletising process. Pellets are preferred for use in torrefaction reactor **601** because they are easy to store and transport between units, and do not produce large amounts of dry powder that could be detrimental to machinery and human health.

In order for the torrefaction process to be as efficient as possible, the pellets are further dried in pellet dryer **703** to reduce the moisture content to 5% to 7%. Pellet dryer **703** is a belt dryer, and air **713,** heated to around **250**°C by heat exchanger **707,** is blown at low velocity through the belt. The pellets have a low surface area, and should remain static within the dryer to avoid damage. Therefore the pellets need a long dwell time within pellet dryer **703** before they are output as dry pellets **503.** Dry pellets **503** are immediately transferred to the torrefaction reactor **601,** since because of their low moisture content, dwell in normal atmospheric conditions will lead to reabsorption of moisture. Thus, pellets **702** may be stored in storage **714** before being transferred to the pellet dryer **703** as needed.

In this example, both dryers **701** and **703** operate at around **250** °C. However, they may operate at any suitable temperature, and need not be at the same temperature. Control system **120** may vary the temperature of the dryers in order to produce a continuous system. For example, the pellet dryer **703** will preferably dry the pellets at the same rate that they are torrefied by the torrefying unit **502,** in order to reduce dwell time before they enter torrefaction reactor **601.** A second consideration is whether it is preferable to store wet fibre **106** (in which case fibre dryer **701** would preferably operate at the same rate as pellet dryer **703**), or as pellets **712** (in which case fibre dryer 71 would preferably operate at the same rate as autoclave **401**).

In order to reduce complexity, if the dryers are to operate at the same temperature then a single burner and heat exchanger could be included, rather than one for each dryer.

In the embodiment described with respect to Figure 7, the heat for dryers **701** and **703** is provided entirely by thermally converting VOCs **505** (with natural gas **117** available in the case of a breakdown). However, as described previously, waste gases **609**a and **609**b from torrefaction reactor **601** could supplement the heat provided to the heat exchangers. In a further embodiment, the dryers could be heated using waste gases **108** from reciprocating engine **302,** with the VOCs **505** being used to heat the steam treatment unit **201** instead. In a still further embodiment, if one dryer is determined to need considerably hotter air than the other, then the waste air and gases from the hotter dryer might be used to heat the air for the other one.

Several embodiments have therefore been described for the routing of heat around apparatus **101.** In all cases, heat required for the autoclave **401,** the drying unit **501,** and the torrefying unit **502** are all generated by thermally converting either the plastics or the VOCs extracted from waste **105.** In addition, electricity is generated from the waste, making apparatus **101** self-sufficient. Natural gas and grid electricity are provided only for use in the event of a breakdown, in order to keep the apparatus running. The self-sufficiency of the unit, which takes unwanted waste and creates a useable product from it, means that this apparatus is sustainable, and reduces emissions of greenhouse gases over other methods of disposing of waste.

### Figure 8

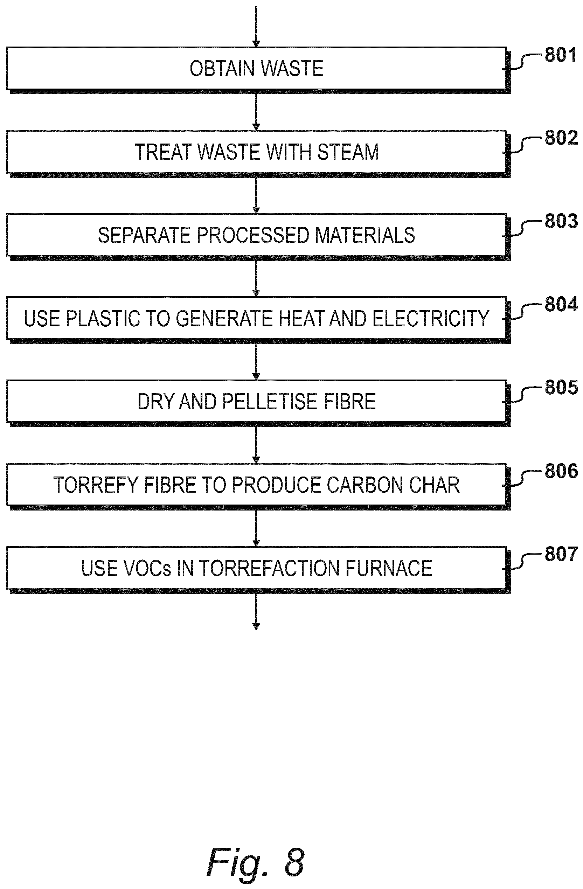

Figure 8 shows steps taken when operating apparatus **101** to process waste into carbon char. Consecutive steps are shown, following the journey of a single load of waste. However, the apparatus runs continuously and therefore all the steps are being carried out simultaneously at all times.

At step **801** waste **105** is obtained, usually from a local authority or company that has collected it from households or commercial premises. At step **802** the waste is treated with high pressure steam in an autoclave **401** to produce processed material **202,** which is separated into its parts at step **803,** including fibre **106** and plastics **107.**

At step **804** the plastics **107** are thermally converted to generate heat and electricity for use in apparatus **101.** At step **805** the fibre **106** is dried and pelletised to produce dry pellets **503,** and at step **806** the pellets are torrefied to produce carbon char **504.** At step **807,** VOCs **612** produced by the torrefaction process are thermally converted to heat torrefaction reactor **601.**

## Claims

1. Apparatus for processing waste-derived cellulose fibre into carbon char, comprising:
an autoclave for treating waste with steam to produce processed material, said processed material including cellulose fibre and plastics;
a drying system for drying said cellulose fibre;
a torrefying unit for torrefying said dried cellulose fibre to produce carbon char and VOCs; and
thermal conversion means for thermally converting either said plastics or said VOCs, in order to provide heat for at least one of said autoclave, said drying system or said torrefying unit.

2. Apparatus according to claim 1, wherein said torrefying unit comprises a torrefaction reactor, and said thermal conversion means thermally converts said VOCs to provide heat to said torrefaction reactor.

3. Apparatus according to claim 2, wherein torrefaction reactor comprises said burner and a chamber, and said burner thermally converts said VOCs to provide heat to said chamber.

4. Apparatus according to claim 1, further including an energy generation unit that produces heat to generate steam for said autoclave.

5. Apparatus according to claim 4, wherein
said energy generation unit includes said thermal conversion means; and
said apparatus further comprises:
a separation system for separating said processed material into cellulose fibre, plastics, and other materials;
a first conduit from said separation system to said drying system for providing said cellulose fibre to said drying system; and
a second conduit from said separation system to said energy generation system for providing said plastics to said energy generation system.

6. Apparatus according to claim 5, wherein said energy generation unit comprises:
a gasifier for processing said plastics into synthesis gas; and
a reciprocating engine and connected electricity generator for generating electricity using said syngas.

7. Apparatus according to claim 6, wherein waste gases produced by said reciprocating engine are output as heat to generate steam for said autoclave.

8. Apparatus according to claim 6, wherein waste gases produced by said reciprocating engine are output as heat to either said torrefying unit or said dryer.

9. Apparatus according to claim 4, wherein said thermal conversion means thermally converts said VOCs to provide heat to generate steam for said autoclave.

10. A method of producing carbon char from waste, comprising the step of processing waste by:
treating said waste with high pressure steam to produce processed material that includes cellulose fibre and plastics, and
torrefying said cellulose fibre to produce carbon char and VOCs;
wherein heat used during said step of processing waste is produced by thermally converting at least one of said plastics and said VOCs.

11. A method according to claim 10, wherein said plastics are thermally converted to provide heat for the step of torrefying said cellulose fibre.

12. A method according to claim 10, wherein said plastics are thermally converted to provide heat for the step of treating said waste with steam.

13. A method according to either of claims 11 or 12, wherein said plastics are thermally converted by the steps of:
gasifying said plastics to produce synthesis gas;
using said gas to power an engine; and
extracting heat from the waste gases of said engine.

14. A method according to claim 15, further including the step of using the movement of said engine to generate electricity.

15. A method according to any of claims 10 to 14, wherein said VOCs are thermally converted to provide heat for the step of torrefying said cellulose fibre.

16. A method according to any of claims 10 to 14, wherein said VOCs are thermally converted to provide heat for the step of treating said waste with steam.

17. A method according to any of claims 10 to 17, wherein the waste gases produced by thermally converting said VOCs are used to provide heat for one or more of the steps of:
treating said waste with steam;
drying said cellulose fibre; and
torrefying said cellulose fibre.
